# EUROPÄISCHE PATENTANMELDUNG

(11) **EP 1 420 201 A1**
(43) Veröffentlichungstag der Anmeldung: **19.05.2004**
(21) Anmeldenummer: 02405991.7
(22) Anmeldetag: 18.11.2002
(51) Int. Cl.: F16L 37/14

(54) **Schlauchkupplung mit Kupplungs-Ring**

(71) Anmelder: Polyflex AG, 5430 Wettingen - 2 (CH)
(72) Erfinder: Schmid, Marco Fabian, 5430 Wettingen - 2 (CH)

(57) **Zusammenfassung**

Die Kupplungsteile (1), die aussen auf eine Schlauch- oder Rohrleitung aufgeschraubt werden, bestehen aus Kunststoff oder Leichtmetall mit Verschleiss-Buchse (2) aus Stahl oder gehärtetem Stahl und verbinden, bei freiem Durchfluss, zwei Schlauch- oder Rohrleitungen mittels eines Kupplungsringes (5) mit Gummi-Dichtung (7) und Drahtseil (3), indem die Drahtseil-Enden durch den Kupplungsring (5) in die Nut-Rillen der beiden Kupplungsteile (1) gesteckt werden.

## Beschreibung

### Technisches Gebiet

Zweck der Erfindung ist es, solche Verbindungen mit geringem Gewicht, dauerhaft, verschleissarm und auch äusserlich in Form und Abmessung sehr kompakt herzustellen. Sie soll für jeden Anwender einfach zu handhaben sein, den Materialfluss nicht behindern und auch durch ihre äussere Formgebung anwendungsfreundlich sein.

### Stand der Technik

Schlauchkupplungen in grösseren Nennweiten sind in der Regel schwer und unhandlich. Sie behindern dadurch ein rationelles Arbeiten mit entsprechenden Förderleitungen.
Zudem werden diese Kupplungen meist innen in die Schlauchleitung eingebaut, verengen dadurch den Durchfluss und sind somit einem hohen Verschleiss ausgesetzt.

Des Weiteren haben herkömmliche Kupplungen in diesem Bereich massive, nach aussen abstehende Teile wie Hebel oder Gelenke, die wiederum das Arbeiten damit erschweren und die Gefahr von Sachbeschädigungen und Verletzungen mit sich bringen.

### Detaillierte Darstellung der Erfindung

Schlauch- und Rohrverbindung bestehend aus auf Aussenseite der Leitung aufschraubbaren Kupplungsteilen 1 und einem Kupplungs-Ring 5 zur Verbindung der beiden Kupplungsteile 1.
Sowohl die aufschraubbaren Kupplungsteile 1 wie auch der Kupplungs-Ring 5 besteht zum wesentlichen Teil aus Kunststoff oder Leichtmetall. Die aufschraubbaren Kupplungsteile 1 sind end-seitig innen mit einer Verschleissbuchse 2 aus Stahl oder gehärtetem Stahl ausgerüstet. Der Kupplungs-Ring 5 seinerseits ist mit einem Drahtseil 3 ausgerüstet, welches mit dem Kunststoff-/Leichtmetallkörper 5 verschweisst oder mechanisch verbunden ist und die sichere Verbindung von zwei Kupplungsteilen1 bewirkt, indem die Seil-Enden in die Ring-Oeffnungen 4 eingeschoben werden.

Mit der Einfachheit dieser Konstruktion und der Materialwahl wird dank dem gegenüber andern Systemen weitaus geringeren Gewicht, der einfacheren Montage und der äusseren kompakten Formgebung die Arbeit des Bedienungspersonals wesentlich erleichtert. Ein bei herkömmlichen Systemen üblicher Kraftaufwand für das An- und Entkupplung entfällt.

Die vielfach hochabrasiven Durchflussmedien passieren die Kupplung ohne Querschnitts-Verengung und die innen liegenden Verschleissbuchsen gewährleisten gegenüber herkömmlichen Innenschlauch-Kupplungen eine um ein Vielfaches längere Standzeit.

### Aufzählung der Zeichnungen

1 / Aufschraubbares Kupplungs-Teil
2 / Aufschraubbares Kupplungs-Teil mit entkuppeltem Kupplungs-Ring
3 / Aufschraubbares Kupplungs-Teil mit gekuppeltem Kupplungs-Ring
4 / Kupplungs-Ring mit je einem gekuppelten und ungekuppelten aufschraubbaren Kupplungs-Teil
5 / Kupplungs-Ring mit zwei gekuppelten aufschraubbaren Kupplungs-Teilen
6 / Kupplungs-Ring mit losen, nicht eingesteckten Seil-Enden
7 / Kupplungs-Ring mit eingestecktem Seil

### Ausführung der Erfindung

Zweck dieses aufschraubbaren Schlauchkupplungs-Systems ist es, zwei Schlauch-/Rohrenden auf einfache, sichere Art und Weise, dauerhaft und anwendungsfreundlich zu verbinden.

Die aufschraubbaren Kupplungs-Teile 1 werden dazu auf einen zu ihrer inneren, gewindeartigen Struktur passenden Schlauch aufgeschraubt.
Das kleinste Lichtmass dieser Kupplungs-Teile weist die end-seitig liegende Verschleissbuchse 2 aus Stahl oder gehärtetem Stahl auf, es entspricht dem Lichtmass der eingeschraubten Schlauch-/Rohrleitung und garantiert somit einen freien Durchfluss.

Zwei derart mit aufschraubbaren Kupplungs-Teilen 1 versehene Schlauch-/Rohrenden bzw. die Enden dieser Kupplungs-Teile 1 werden in den zur Verbindung dienenden Kupplungs-Ring 5 eingeführt.

Alsdann wird diese noch lose Verbindung der beiden Schlauch-/Rohrenden dadurch gesichert, dass die Enden des Drahtseils 3, welches aussen auf dem Kupplungs-Ring 5 montiert ist, durch die entsprechenden Oeffnungen 4 auf die Innenseite des Kupplungsringes 5 geschoben werden, wo sie sich innerhalb der vorgegebenen Nut-Rille radial in ihrer ganzen Länge ergeben und dadurch die Bundringe der beiden Kupplungs-Teile 1 blockieren.

Will der Anwender ein Schlauchende ent-kuppeln/lösen, so kann er dies einfach durch Herausziehen eines Seil-Endes 3 rasch und problemlos bewerkstelligen.

Durch Ihre äussere, kompakte Formgebung kann eine mit diesem System gekuppelte Schlauchleitung über auch heikle Böden gezogen/geschleppt werden, ohne dass Aussenteile des Kupplungssystems anhängen, beschädigen.

### Zeichnungen

### Nummerierung

1 / Aufschraubbares Kupplungs-Teil
2 / Aufschraubbares Kupplungsteil mit entkuppeltem Kupplungs-Ring
3 / Aufschraubbares Kupplungsteil mit gekuppeltem Kupplungs-Ring
4 / Kupplungs-Ring mit je einem gekuppelten und ungekuppelten aufschraubbaren Kupplungs-Teil
5 / Kupplungs-Ring mit zwei gekuppelten, aufschraubbaren Kupplungsteilen
6 / Kupplungs-Ring mit losen, nicht eingesteckten Seil-Enden
7 / Kupplungs-Ring mit eingestecktem Seil

### Details

1 Aufschraubbares Kupplungs-Teil aus Kunststoff oder Leichtmetall
2 Verschleiss-Buchse aus Stahl oder gehärtetem Stahl
3 Drahtseil
4 Oeffnungen im Kupplungs-Ring zum Einstecken der Seil-Enden
5 Kupplungs-Ring aus Kunststoff oder Leichtmetall
6 Befestigung des Drahseiles am Kupplungs-Ring
7 Gummidichtung

### Oberbegriff

Aufschraubbare, verschleissfeste Schlauchkupplungsteile, die mittels eines Kupplungs-Ringes und dessen Drahtseilenden verbunden werden

### Kennzeichnender Teil

Diese Schlauch-/Rohrverbindung ist dadurch gekennzeichnet, dass ihre Teile aus leichten Werkstoffen (1, 5) hergestellt werden, innen einen freien, nicht verengten Durchfluss und einen Verschleiss-Schutz (2) aufweisen und mittels eines Kupplungsringes (5) durch einfaches Einstecken der Drahtseil-Enden (3) gekuppelt werden, wobei die Konstruktion darauf ausgelegt ist, eine möglichst kleine Aussenabmessung mit glatten Flächen zu bieten.

Zwei auf Schlauch-Aussenseiten aufschraubbare Kupplungsteile (1) aus Kunststoff oder Leichtmetall, verstärkt mit einer inneren Verschleiss-Buchse (2) aus Stahl oder gehärtetem Stahl werden mittels eines Kupplungsrings (5) aus Kunststoff oder Leichtmetall verbunden, indem die Enden des am Kupplungsring (5) befestigten Stahlseils (3) in den Kupplungsring (5) eingesteckt werden und dort das jeweilge Kupplungsteil (1)durch Ausfüllen der Nut-Rille sichern oder durch einfaches Herausziehen der Seil-Enden (3) diese Kupplungsteile (1) wieder freigeben.

### Unabhängiger Patentanspruch

Aussen aufschraubbare Schlauchkupplungsteile aus Kunststoff oder Leichtmetall, mit freiem Durchgang und verstärkt mit innerem Verschleiss-Schutz aus Stahl oder gehärtetem Stahl, die mittels eines aus Kunststoff oder Leichtmetall hergestellten Kupplungs-Ringes und des darauf angebrachten Stahlseiles verbunden werden.

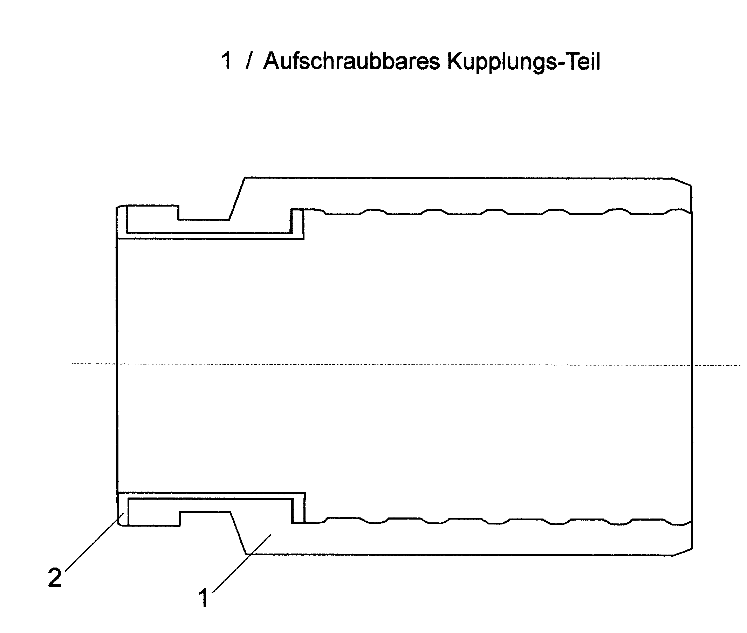

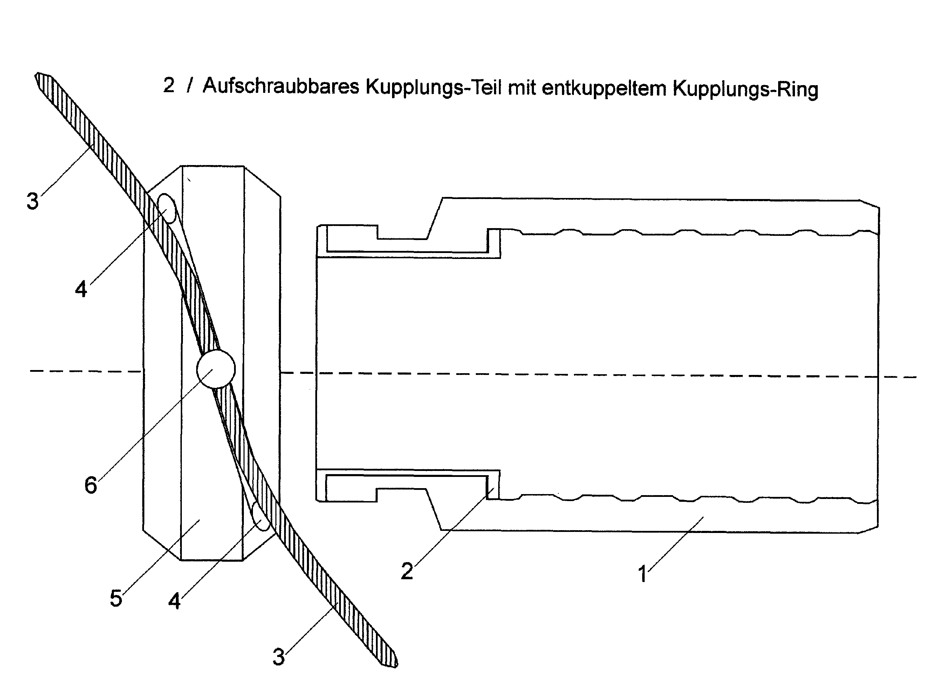

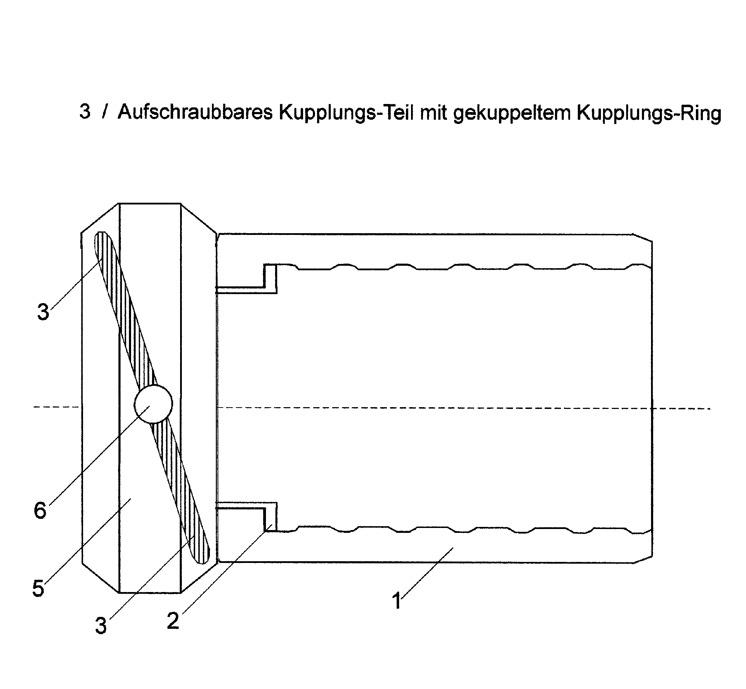

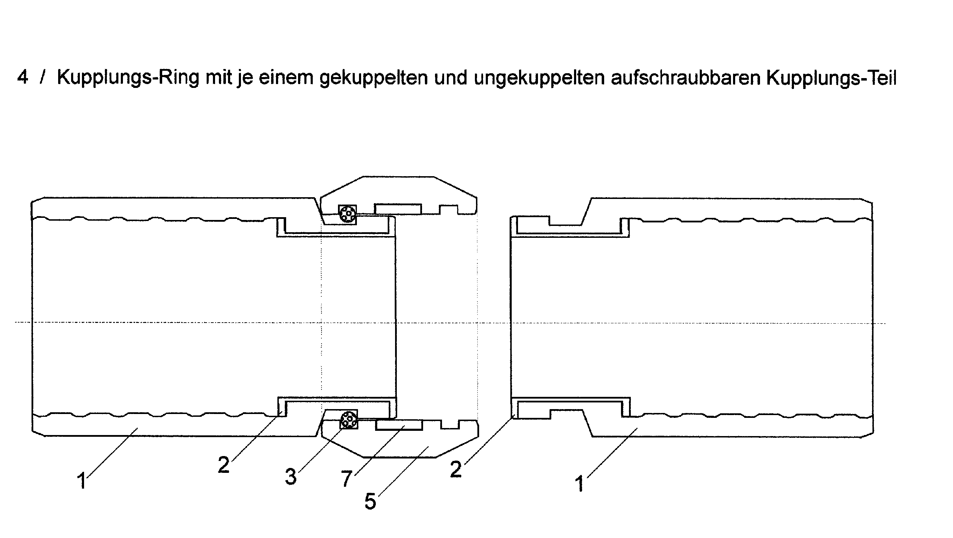

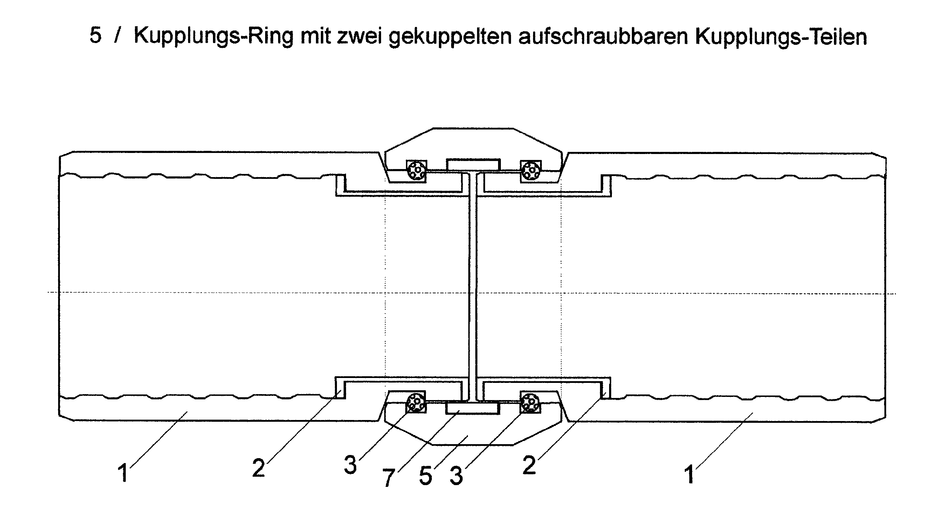

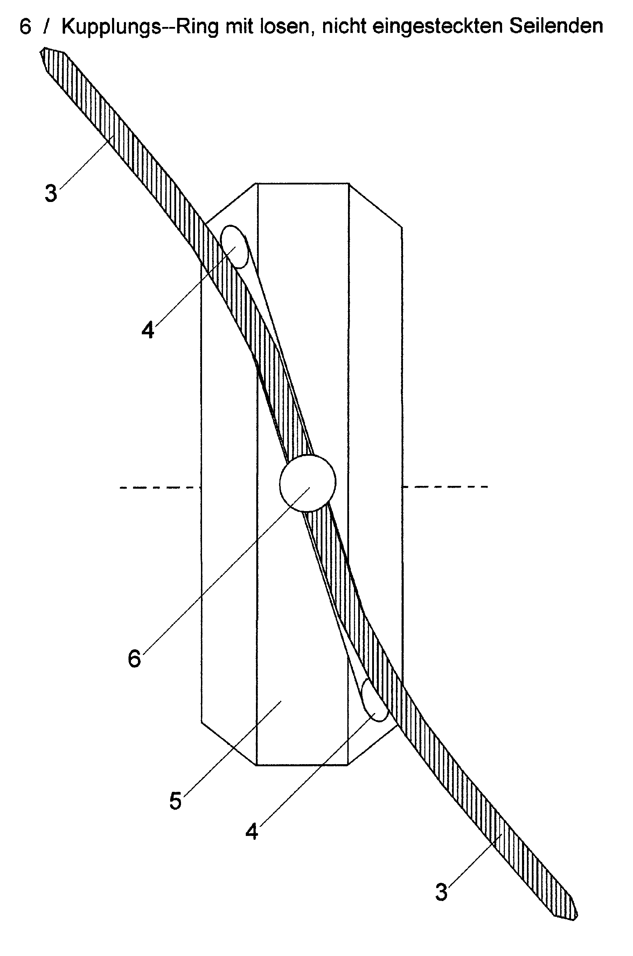

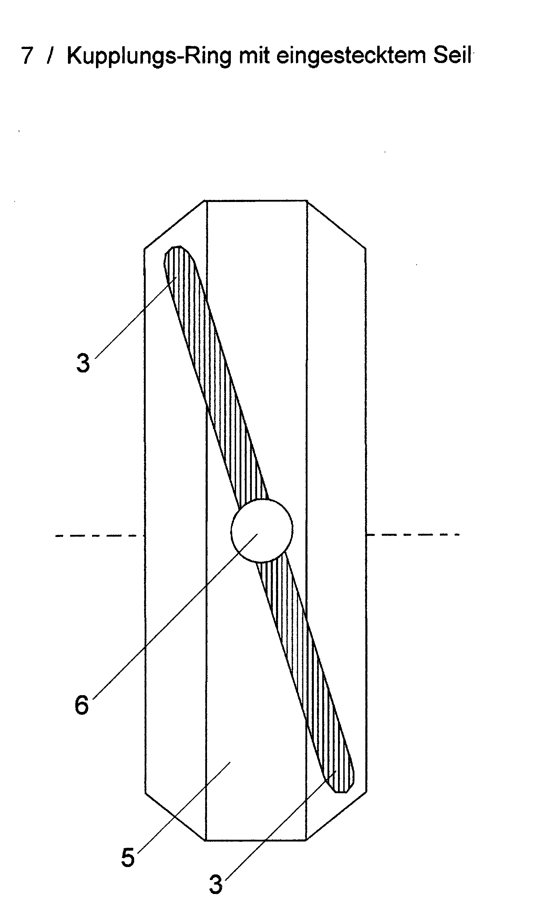

## Patentansprüche

1. Aussen aufschraubbare Schlauchverbindung mit freiem Durchgang.

2. Schlauchverbindung gemäss Anspruch **1**., **dadurch gekennzeichnet, dass** ihre Mantelteile aus Kunststoff oder Leichtmetall sind.

3. Schlauchverbindung gemäss Anspruch **2**., **dadurch gekennzeichnet, dass** sie mit einer Verschleiss-Buchse aus Stahl oder gehärtetem Stahl ausgerüstet ist.

4. Schlauchverbindung gemäss Anspruch **3**., **dadurch gekennzeichnet, dass** die aufschraubbaren Kupplungsteile mittels eines Kupplungs-Ringes verbunden werden.

5. Schlauchverbindung gemäss Anspruch **4**., **dadurch gekennzeichnet, dass** der Kupplungsring aus Kunststoff oder Leichtmetall gefertigt ist.

6. Schlauchverbindung gemäss Anspruch **5**., **dadurch gekennzeichnet, dass** der Kupplungsring mit einem Stahlseil versehen ist.

7. Schlauchverbindung gemäss Anspruch **6**., **dadurch gekennzeichnet, dass** die Stahlseil-Enden des Kupplungsringes zwischen diesen und die Nut-Rillen der aufschraubbaren Schlauchkupplungsteile gesteckt werden.
